# EUROPEAN PATENT APPLICATION

(11) **EP 1 939 783 A2**
(43) Date of publication of application: **02.07.2008**
(21) Application number: 07122789.6
(22) Date of filing: 10.12.2007
(51) Int. Cl.: G06F 21/00

(54) **Method, device, and system for digital rights management**

(30) Priority: 22.12.2006 KR 20060133085
(71) Applicant: Samsung Electronics Co., Ltd., Suwon-si, Gyeonggi-do 442-742 (KR)
(72) Inventor: Chae, Seung-chul, Gyeonggi-do (KR); Jung, Kyung-im, Gyeonggi-do (KR); Oh, Yun-sang, Seoul (KR)
(74) Representative: Robinson, Ian Michael

(57) **Abstract**

A method, a device (120), and a system for digital rights management (DRM), for measuring a usage amount of content used in a device (120). The DRM method of measuring a usage amount of content used in a device (120) and reporting the measured usage amount to a server (110), includes: receiving policy information on the measuring or reporting including limitation information on the reporting from the server (110); and limiting usage of the content when the reporting is not performed according to the limitation information included in the received policy information. Accordingly, it is possible to prevent the content from being limitlessly used without allowing the user to report the usage amount of the content by limiting usage of the content, when the usage amount of the content is not reported based on the limitation information.

## Description

### BACKGROUND OF THE INVENTION

### 1. Field of the Invention

Aspects of the present invention relate to digital rights management, and more particularly, to a method, a system, and a device for digital rights management (DRM), capable of measuring a usage amount of content.

### 2. Description of the Related Art

The Internet and similar advances in communication technology has contributed to the development of digital content. Digital content includes games, music, information, images, characters, publications, and the like. Unlike analog content, however, digital content can be easily copied, reused, fabricated, and distributed without loss.

Digital rights management (DRM) is a technology to protect rights and profits of content providers, prevent illegal copying, and support generation and circulation of content, such as charging of fees, acting payment, and the like. In order to protect content and content providers from illegal copying of the content, DRM has been actively researched, and a plurality of services using DRM has been introduced.

In a conventional DRM system, when digital content is sold, a right for the digital content, for example, a reproducible number and a reproduction time, are designated and sold. However, it is nearly impossible for a user to estimate exactly how many times the digital content has been used when purchasing the digital content. When the user uses up the digital content within the range of the purchased right, the user has to purchase a new right. The content provider maximizes profits by imposing fees on the usage amount of the content, after the user uses the content as much as the user wants, whenever the user wants the content. When the usage amount of content can be measured, it is possible to use information on how much the content has been used to reduce licensing costs or perform marketing.

Recently, DRM based on a metering technique has become more common. Metering is a technique of measuring how much the user has used a distributed content, after a DRM-protected content is distributed to the user. The service provider can impose fees with respect to the user by measuring the number of reproductions and copies of the content using the metering technique and pay a copyright fee to the content provider based on information on the usage amount of the content. The metering system provides a method of recording the usage amount of the content and reporting the recorded metering data, when using DRM-protected content.

A current metering system distributes content so as to allow the content to be used without limit under a condition that the metering amount of the content is reported. However, the user can intentionally prevent the metering data of the digital content from being reported by, for example, interrupting a connection between a content reproduction apparatus and a network. Accordingly, it is possible for the user not to report the metering data of the content and to use the content without limit.

In addition, in the current metering systems, the record of the usage history of the content is constructed based on a recording format that is previously set by the content reproduction apparatus and the service provider. Accordingly, the usage history of the content is recorded and reported regardless of an intention of the user. However, in order to protect privacy of the user, it is necessary that the user select the usage history of the content to be recorded and reported.

### SUMMARY OF THE INVENTION

Aspects of the present invention provide a method, a system, a device, and a computer-readable recording medium having embodied thereon a computer program for executing a digital rights management (DRM) method capable of preventing content from being limitlessly used without reporting a usage amount of the content by a user and protecting privacy of the user.

According to the present invention there is provided a DRM method, a device, a DRM system and a computer-readable recording medium as set forth in the appended claims. Other features of the invention will be apparent from the dependent claims, and the description which follows.

According to an aspect of the present invention, a digital rights management (DRM) method of measuring a usage amount of content used in a device and reporting the measured usage amount to a server is provided. The DRM method includes receiving policy information on the measuring or reporting including limitation information on the reporting from the server; and limiting usage of the content when the reporting is not performed according to the limitation information included in the received policy information.

According to another aspect of the present invention, a digital rights management method of measuring a usage amount of content used in a device and reporting the measured usage amount to a server is provided. The DRM method includes (a) receiving a rights object corresponding to selected content and including limitation information on the reporting from the server; and limiting usage of the content when the reporting of the selected content is not performed according to the limitation information.

According to another aspect of the present invention, a device to measure a usage amount of content and to report the measured usage amount to a server is provided. The device includes a policy information storage unit to store policy information on the measuring or reporting including limitation information on the reporting; and a DRM agent to limit usage of the content when the reporting is not performed according to the limitation information included in the policy information.

According to another aspect of the present invention, a digital rights management (DRM) system is provided. The system includes a device to measure a usage amount of content and to report the measured usage amount; and a server to receive the report from the device, wherein the server transmits policy information on the measuring or reporting comprising limitation information on the reporting to the device, and the device limits usage of the content when the reporting is not performed according to the limitation information included in the policy information.

According to another aspect of the present invention, a computer-readable recording medium is provided having embodied thereon a computer program to execute the DRM method of measuring a usage amount of content used in a device and reporting the measured usage amount to a server, the DRM method including receiving policy information on the measuring or reporting including limitation information on the reporting from the server; and limiting usage of the content when the reporting is not performed according to the limitation information included in the received policy information.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram illustrating a digital rights management (DRM) system according to an embodiment of the present invention;
FIG. 2 is a flowchart of a DRM process according to an embodiment of the present invention;
FIG. 3 is a detailed flowchart illustrating an operation of storing a user agreement and policy information of the method of FIG. 2, according to an embodiment of the present invention;
FIG. 4 illustrates a data structure of a DeviceHello message according to an embodiment of the present invention;
FIG. 5 illustrates a data structure of a ServiceHello message according to an embodiment of the present invention;
FIG. 6 illustrates a data structure of a Registration Request message according to an embodiment of the present invention;
FIG. 7 illustrates a data structure of a Registration Response message according to an embodiment of the present invention;
FIG. 8 illustrates a data structure of a Metering Request message according to an embodiment of the present invention;
FIG. 9 illustrates a data structure of a Metering Report message according to an embodiment of the present invention; and
FIG. 10 illustrates a data structure of a Metering Confirm message according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

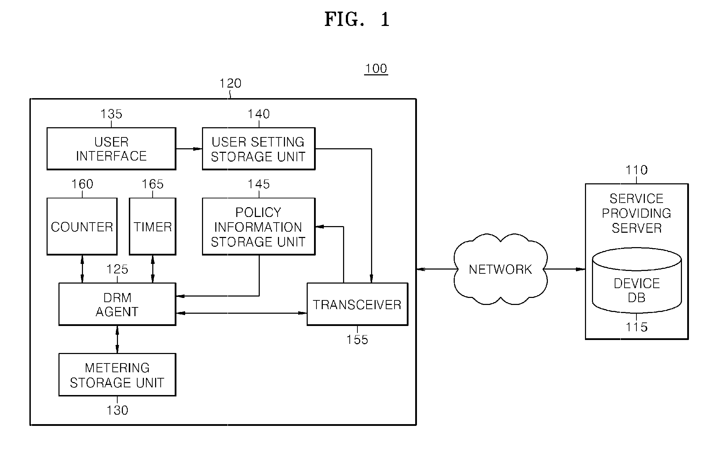

FIG. 1 is a block diagram of a digital rights management (DRM) system 100 according to an embodiment of the present invention. The DRM system 100 includes a service providing server 110 and a device 120. The service providing server 110 and the device 120 are connected to each other through a wired or wireless network. The service providing server 110 and the device 120 may be continuously or discontinuously connected. The service providing server 110 distributes content and is included in a service providing site that provides a service related to the content or in another location within the network.

The service providing server 110 distributes encrypted content so as to allow only authorized users to use the content. The service providing server 110 generates a metering rights object and transmits the metering rights object to the device 120 so as to perform a metering function. The metering rights object is a file in which an authority of the content is written and for representing that the content is authorized to be used under a condition that a usage history of the content is recorded.

The service providing server 110 transmits policy information on measurement and reportage of a usage amount of the content to the device 120 and registers the device 120. The policy information includes a reporting period of the usage amount, limitation information on a report, items of data to be recorded and reported by the device, and the like. The service providing server 110 includes a device database 115 for registering the device 120.

The device 120 reproduces digital content, such as games, music, information, images, electronic books, and the like. The device 120 may be a personal computer, MP3 player, portable multimedia player (PMP), set-top box, home entertainment device, mobile phone, or any device capable of reproducing digital content. The device 120 includes a DRM agent 125, a metering storage unit 130, a user interface 135, a user setting storage unit 140, a policy information storage unit 145, a transceiver 145, a counter 160, and a timer 165. According to other aspects of the invention, the device 120 may include additional and/or different units. Similarly, the functionality of two or more of the above units may be combined into a single component.

The DRM agent 125 allows content to be used under an authority allowed by analyzing the metering rights object of the content. In addition, the DRM agent 125 records a usage amount of the content according to policy information received from the service providing server 110 and reports the usage amount of the content to the service providing server 110. Metering data of the content is stored in the metering storage unit 130. The user may be prohibited from counterfeiting, altering, and/or deleting the data stored in the metering storage unit 130. When the usage amount is not reported according to the limitation information on the report included in the policy information, the DRM agent 125 limits the usage of the content.

According to an embodiment of the present invention, the DRM agent 125 has an array of control bits as follows:
First service provider | first control bit
Second service provider | second control bit
Third service provider | third control bit.

Here, each control bit can store a value 0 or 1. The number of arrays may be the same as the number of service providers registered by the DRM agent 125. When registering a new service provider, the DRM agent 125 generates a control bit corresponding to the new service provider and initializes a value of the control bit to 0. When receiving a request to use predetermined content from a user, the DRM agent 125 checks a control bit corresponding to a service provider of the predetermined content. The DRM agent 125 controls the usage of the content based on the value of the control bit. For example, when the control bit corresponding to the service provider has a value of 0, a requested operation is performed. Alternatively, when the control bit has a value of 1, the requested operation is ignored. As described above, the DRM agent 125 can limit the usage of the content by using the control bits.

The user interface 135 receives a set value on measuring or reporting of the usage amount of the content and information on whether policy information received from the service providing server 110 is agreed to. The user setting storage unit 140 stores the set value received from the user. The policy information storage unit stores the policy information received from the service providing server 110. The counter 160 and the timer 165 control a reporting period of the usage amount of the content.

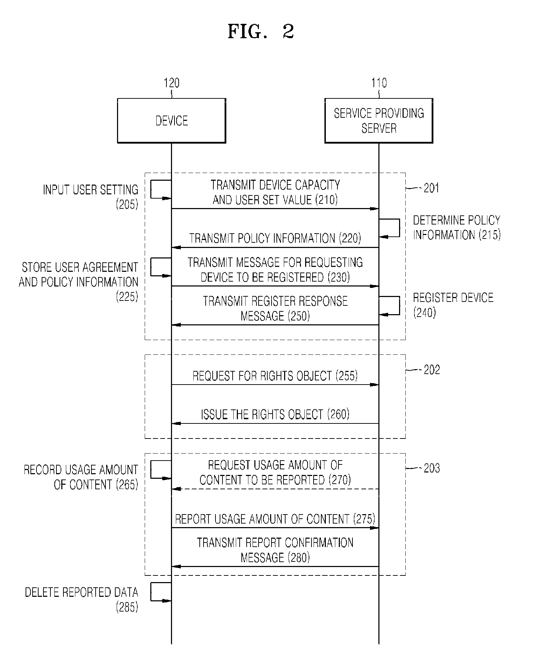

Hereinafter, detailed operations of the service providing server 110 and the device 120 illustrated in FIG. 1 will be described with reference to a flowchart of a DRM method shown in FIG. 2. FIG. 2 is a flowchart of a DRM method according to an embodiment of the present invention. The DRM method includes an operation of setting policies and registering a device (operation 201), an operation of acquiring a metering rights object (operation 202), and an operation of reporting a usage amount (operation 203).

In the operation of setting policies and registering a device (operation 201), a service provider checks whether a metering function of the device can be supported, checks a metering supportable level, and transmits the metering related policy of the service provider to the device 120, so as to provide a metering based content to the device 120.

In operation 205, the device 120 receives a set value on measuring or reporting of the usage amount of the content from the user through the user interface 135. The set value is stored in the user setting storage unit 140.

In operation 210, the device 120 transmits a capacity of the device 120 and the user set value to the service providing server 110. The capacity of the device 120 indicates information on whether the metering function is supported and/or information on a metering level. In operation 210, for convenience of explanation, a message transmitted by the device 120 is referred to as a DeviceHello message.

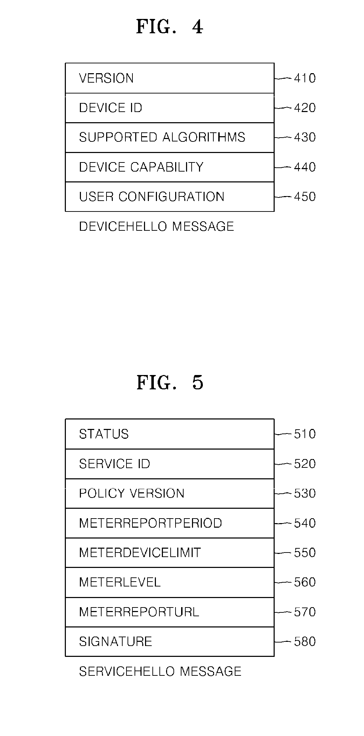

FIG. 4 shows a data structure of the DeviceHello message according to an embodiment of the present invention. The DeviceHello message includes a version field 410, a device ID field 420, a supported algorithm field 430, a device capability field 440, and a user configuration field 450.

The version field 410 contains a version of a communication protocol between the device 120 and the service providing server 110. The device ID field 420 contains a unique ID of the device 120. The supported algorithm field 430 contains a list of algorithms supported by the device 120. The device capability field 440 contains information on whether the metering function is supported by the device and information on a metering level. The user configuration field 450 contains an environment setting value of the user.

The device capability field 440 is used to provide information on whether the device 120 has a function of measuring and recording the usage amount of the content and to provide recordable and reportable items to the service providing server 110. For example, the device capability 440 field may have a type as follows:
<Log Level>
<Accumulate, Summary>
</Log Level>
<Log Data>
<CID, Action, StartTime, EndTime, DeviceType, PlayTime, PlayCount>
</Log Data>.

The above example shows that forms of recording the usage amount supported by the device 120 may be obtained using an accumulation method and a summary method. In the accumulation method, the usage history is sequentially recorded whenever the content is used. In the summary method, a table is prepared based on the content ID (CID), and the total usage amount for each content piece is summarized and recorded.

In the above example, the device 120 can record CID, Action, StartTime, EndTime, DeviceType, PlayTime, and PlayCount, whenever the content is used. Here, the CID indicates the content ID. The Action indicates a usage operation. The StartTime and the EndTime respectively indicate a usage starting time and a usage end time. The DeviceType indicates a type of the device 120. The PlayTime indicates the total usage time of the content. The PlayCount is the total usage count of the content.

For example, when the Log Level is Summary and the Log Data includes the CID and the PlayCount, the device 120 can record the usage history of the content by summarizing the total usage count for each content ID as follows:

### CID1 | 1, CID2 | 3.

When the Log Level is Accumulation and when the Log Data includes the CID, the Action, and the StartTime, the device 120 can record the usage history of the content in the usage order as follows:
CID1 |12:00| Play, CID1 |12:05| Play, CID2 |12:30| export.

The user configuration field 450 is used to transmit the environment setting value of the device 120 that is set by the user through the user interface 135. The user can control content recorded and reported by the device 120 using the environment setting value. For example, when the user configuration field 450 includes values of <CID, Action, PlayCount>, it indicates that the user sets the user configuration field 450 so that only the content ID, a usage operation, and a usage number are recorded and reported when recording and reporting the usage amount of the content. The user configuration field 450 serves to inform the service providing server 110 of a measurement standard desired by the user.

Returning to FIG. 2, the service providing server 110 determines policy information on the measuring or reporting of the usage amount to be applied to the device 120 in operation 215. The service providing server 110 may determine the policy information based on the capacity of the device 120 and the user set value received in operation 210.

In operation 220, the service providing server 110 transmits a message including the determined policy information to the device 120. For convenience of explanation, this message is referred to as a ServiceHello message.

FIG. 5 shows a data structure of the ServiceHello message according to an embodiment of the present invention. The ServiceHello message includes a Status field 510, a Service ID field 520, a PolicyVersion field 530, a MeterReportPeriod field 540, a MeterDeviceLimit field 550, a MeterLevel field 560, a MeterReportURL field 570, and a Signature field 580.

The Status field 510 contains a processing result of a message received from the device 120. The Service ID field 520 contains a unique ID of the service provider. The PolicyVersion field 530 contains a version of a policy to be applied to the device 120. The MeterReportPeriod field 540 contains information about a period for which the device 120 reports the measured metering data to the service providing sever 110. The reporting period may be represented in units of time or the number of executions of the content.

When the reporting period is represented in units of time, the reporting period may be represented as a positive integer. For convenience of explanation, the reporting period is referred to as duration. The timer 165 of the device 120 sets an initial value to a duration value. Thus, over time, the duration value decreases. When the duration value reaches 0, the DRM agent 125 reports the data stored in the metering storage unit 130 to the service providing server 110. When the reporting is performed, the timer 165 is re-initialized to the duration value. For example, when the duration value is 24 in units of hours, the DRM agent 125 performs the reporting to the service providing server 110 every day. If the reporting is not performed (for example, due to disconnection of the network) when the reporting has to be performed, the timer 165 continuously decreases the duration value so that the duration value becomes a negative value. The DRM agent 125 performs the reporting when the device 120 is subsequently connected to the network.

When the reporting period is represented in units of the number of executions of the content, the reporting period can be represented by a positive integer. For convenience of explanation, the reporting period is referred to as a count. The counter 160 of the device 120 sets an initial value to a count value. Whenever the content is executed, the count value is decreased. When the count value reaches 0, the DRM agent 125 reports the data stored in the metering storage unit 130 to the service providing server 110. When the reporting is performed, the counter 160 is re-initialized to the count value. If the reporting is not performed (for example, due to disconnection of the network) when the reporting has to be performed, the counter 160 continuously decreases the count value so that the count value becomes a negative value. The DRM agent 125 performs the reporting when the device 120 is subsequently connected to the network.

The MeterDeviceLimit field 550 contains limitation information on the report of the measured usage amount. The limitation information is a predetermined threshold. The user cannot use the content any more once the measured usage amount reaches the threshold and the measured usage amount is not reported. When the reporting is not performed according to the limitation information of the MeterDeviceLimit field 550, the DRM agent 125 of the device 120 limits the usage of the content. This situation may occur when, for example, the user intentionally disconnects the network.

The DRM agent 125 can limit the usage of the content of a predetermined service provider using the aforementioned control bit. For example, when the reporting is not performed according to the limitation information, the DRM agent 125 prohibits all the rights objects issued by the service provider from being used by setting the control bit of the service provider to which the reporting is performed to 1.

Like the MeterReportPeriod field 540, the limitation information of the MeterDeviceLimit field 550 may be represented in units of time or the number of executions of the content. When the limitation information is represented in units of time, for example, the reporting period is represented as a duration value in the MeterReportPeriod 540, the duration value is 24 (Hr), and a value of the MeterDeviceLimit field 550 is 168 (Hr). Here, the DRM agent 125 attempts to perform reporting every twenty-four hours, that is, every day. When reporting is not performed for 168 hours, that is, seven days, the DRM agent 125 limits the usage of the content of the corresponding service provider. Where the limitation information of the MeterDeviceLimit field 550 is represented in units of the number of executions of the content, for example, where the value is 1000, when the reporting is not performed until the total number of executions of the content reaches 1000, the DRM agent 125 limits the usage of the content of the corresponding service provider.

The MeterLevel field 560 contains information on items of data recorded and reported by the device 120. The MeterLevel field 560 may be determined based on the Device Capability field 440 and the User Configuration field 450 of the DeviceHello message. The service providing server 110 determines items of data recorded and reported by the device 120 among recordable and reportable items of the device 120 represented in the Device Capability field 440 and set items of the user represented in the User Configuration field 450. However, items of data recorded and reported by the device 120 may be determined departing from the set items of the user. In this case, the device 120 asks whether the user agrees to the determination.

The MeterReportURL field 570 contains a uniform resource locator (URL) for reporting the measured metering data. The Signature field 580 contains a signature of the service providing server 110.

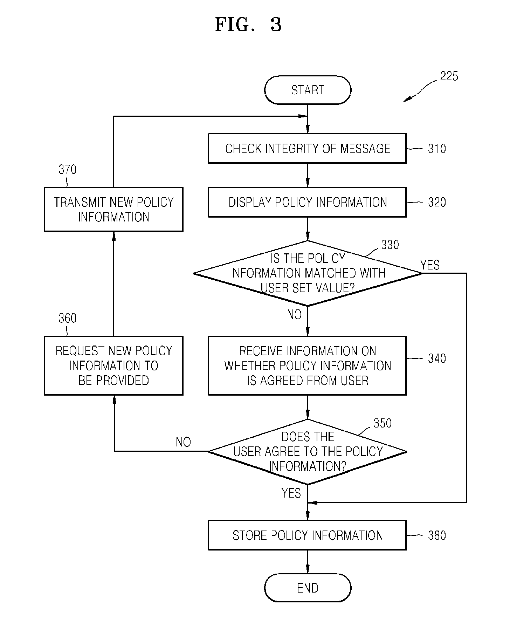

Returning to FIG. 2, the device 120 which receives the ServiceHello message determines whether the user agrees to the received policy information and stores the policy information in operation 225. FIG. 3 is a detailed flowchart of operation 225 of FIG. 2, according to an embodiment of the present invention. In operation 310, the device 120 identifies the signature of the received ServiceHello message and checks integrity of the message.

In operation 320, the user interface 135 of the device 120 displays the received policy information to the user. The user interface 135 displays contents of the MeterReportPeriod field 540 and contents of the MeterLevel field 560 among the fields of the ServiceHello message received from the service providing server to the user.

In operation 330, the device 120 determines whether the user set values stored in the user setting storage unit 140 match the received policy information. When the user set values match the received policy information, the process proceeds to operation 380. When the user set values do not match the received policy information, the process proceeds to operation 340.

In operation 340, the user interface 135 of the device 120 receives information on whether the user agrees to the received policy information. In operation 350, the device 120 determines whether the user agrees to the received policy information. If the user agrees to the received policy information, the process proceeds to operation 380. When the user does not agree to the received policy information, the process proceeds to operation 360.

In operation 360, the device 120 reports to the service providing server 110 that the user dose not agree to the policy information and requests the service providing server 110 to provide new policy information. In operation 370, the service providing server 110 transmits the new policy information to the device 120. The service providing server 110 determines policy information again, generates a ServiceHello message again, and transmits the ServiceHello message to the device 120.

In operation 380, the device 120 stores data of each field of the ServiceHello message in the policy information storage unit 145. The user may be prohibited from counterfeiting, altering, and/or deleting the data stored in the policy information storage unit 145.

Returning to FIG. 2, the transceiver 155 of the device 120 transmits a message to the service providing server 110 requesting registration of the device 120 in operation 230. For convenience of explanation, the message is referred to as a Registration Request message.

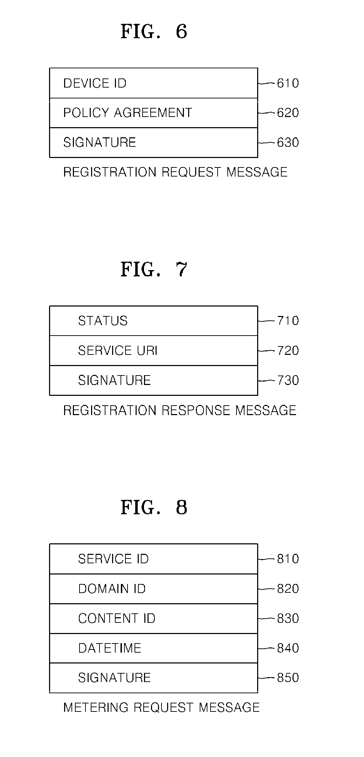

FIG. 6 shows a data structure of the Registration Request message according to an embodiment of the present invention. The Registration Request message includes a Device ID field 610 containing a unique ID of the device 120 and a Policy Agreement field 620 containing a value obtained by allowing the device 120 to sign a hash value of the received message. The hash value indicates that the user agrees to the policy received from the service providing server 110. The Registration Request message also includes a Signature field 630 containing a signature of the device 120.

In operation 240, the service providing server 110 registers the device 120. The service providing server 110 stores an ID of the device 120 and policy information to be applied to the device 120 in the device database 115. After registering the device 120, the service providing server 110 transmits a message indicating that registration is complete to the device 120 in operation 250. For convenience of explanation, the message is referred to as a Registration Response message.

FIG. 7 shows a data structure of the Registration Response message according to an embodiment of the present invention. The Registration Response message includes a Status field 710 containing a registration status of the device 120, a service URI field 720 containing a uniform resource identifier (URI) of the service provider, and a Signature field 730 containing a signature of the service providing server 110.

In the operation of acquiring a metering rights object (operation 202), the device 120 selects content and acquires a metering rights object corresponding to the selected content. In operation 255, the device 120 selects desired content and transmits a rights object request message to the service providing server 110 requesting a metering rights object corresponding to the selected content. The rights object request message includes a content ID (CID) of the selected content.

In operation 260, the service providing server 110 transmits a rights object response message for issuing a metering rights object on the selected content. The metering rights object may include limitation information on the report of the usage amount of the selected content. The limitation information is a predetermined threshold. The user cannot use the selected content any more if the measured usage amount is not reported and the measured usage amount reaches the threshold.

Like the aforementioned MeterDeviceLimit field 550, the limitation information included in the metering rights object may be represented in units of time or the number of executions of the content. When the metering rights object includes the limitation information and when the usage amount of the corresponding content is not reported according to the limitation information, the DRM agent 125 limits the usage of the corresponding content. The service provider can limit the usage of the corresponding content by allowing the metering rights object to include limitation information in a case where the usage amount for the content is not reported.

Returning to FIG. 2, the device 120 measures the usage amount of the content and reports the measured usage amount to the service providing server 110 in operation 203. In operation 265, the DRM agent 125 records the usage amount of the content in the metering storage unit 130 according to the policy information stored in the policy information storage unit 145. The DRM agent 125 records the usage amount of the content in the metering storage unit 130 according to the policy information received from the service providing server 110 in operation 220 and agreed by the user.

In operation 270, the service providing server 110 transmits a message to the device 120 requesting the measured metering data to be reported. For convenience of explanation, the message is referred to as a Metering Request message. Since the device 120 reports the usage amount according to the policy information that is received from the service providing server 110 and stored, operation 270 is a selective operation. Accordingly, as shown in FIG. 2, an arrow corresponding to operation 270 is represented as a dotted line.

FIG. 8 shows a data structure of the Metering Request message according to an embodiment of the present invention. The Metering Request message includes a Service ID field 810, a Domain ID field 820, a Content ID field 830, a DateTime field 840, and a Signature field 850.

The Service ID field 810 contains a unique ID of the service provider. The Domain ID field 820 contains information on a predetermined domain when desiring to receive a report on the usage amount of contents shared by the predetermined domain. The Content ID field 830 contains information on predetermined content when desiring to receive a report on the usage amount of the predetermined content. The DateTime field 840 contains information on a predetermined time when desiring to receive a usage history within the predetermined time. The DateTime field 840 may include a starting point or end point of the predetermined time. Each value may be represented by a time value with a YYYYMMDDHH format. When the DateTime field 840 includes only the starting point, the device 120 reports a usage amount after the starting point. When the DateTime field 840 includes only the end point, the device reports a usage amount before the end point. When the DateTime field 840 includes both of the starting and end points, the device 120 reports a usage amount between the starting and end points.

The Signature field 850 contains a signature value representing that a request for reporting the metering data is legal. The signature value is obtained by signing the hash value of the Metering Request message using a public key of the service providing server 120.

In operation 275, the device 120 reports the usage amount of the content to the service providing server 110. For convenience of explanation, the transmitted message will be referred to as a Metering Report message. The reporting of the usage amount of the content is performed when reaching the reporting period set in the MeterReportPeriod field 540 among the ServiceHello messages received in operation 220, when the usage amount is not reported after exceeding the limitation information of the MeterDeviceLimit field 550, or when receiving the Metering Requesting message from the service providing server 110. The usage amount may be reported when the user instructs the usage amount to be reported through an interface of the device 120.

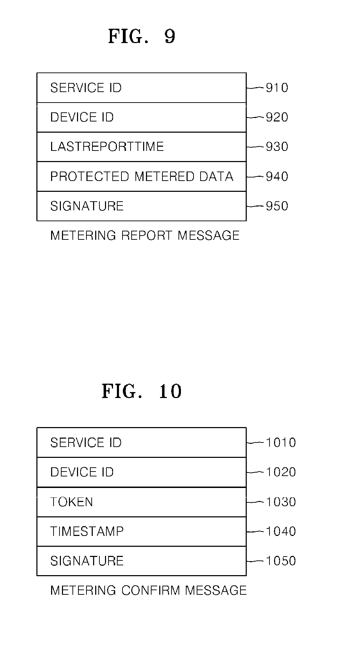

FIG. 9 shows a data structure of the Metering Report message according to an embodiment of the present invention. The Metering Report message includes a Service ID field 910, a Device ID field 920, a LastReportTime field 930, a Protected Metered Data field 940, and a Signature field 950.

The Service ID field 910 contains a unique ID of the service provider. The Device ID field 920 contains a unique ID of the device 120. The LastReportTime field 930 contains information on a time when the last report is performed. The Protected Metered Data field 940 contains measured metering data with a protected type. The measured metering data is encrypted using a key designated between the device and the service providing server 110. Detailed items of the Protected Metered Data field 940 are received from the service providing server 110 in operation 201 and determined according to the policy information agreed to by the user. The Signature field 950 contains a signature of the device 120.

Returning to FIG. 2, when receiving the Metering Report message, the service providing server 110 transmits a message for determining that the reporting is completed to the device 120 in operation 280. For convenience of explanation, the message is referred to as a Metering Confirm message.

FIG. 10 shows a data structure of the Metering Confirm message according to an embodiment of the present invention. The Metering Confirm message includes a Service ID field 1010, a Device field 1020, a Token field 1030, a TimeStamp field 1040, and a Signature field 1050.

The Service ID field 1010 contains a unique ID of the service provider. The Device ID field 1020 contains a unique ID of the device 120. The Token field 1030 contains token information for verifying that the service providing server 110 suitably receives the Metering Report message. The TimeStamp field 1040 contains a verified time value for representing a time when the final report is completed. The Signature field 1050 contains the signature of the service providing server 110.

Returning to FIG. 2, when receiving the Metering Confirm message, the device 120 checks whether the message is valid by identifying an issuing subject of the token and checking whether the token is signed in operation 285. If the message is valid, the control bit of the corresponding service provider is initialized to 0, and the reported data is deleted from data stored in the metering storage unit 130. When not receiving the token from the service providing server 110, the device 120 cannot delete data stored in the metering storage unit 130.

According to aspects of the present invention, it is possible to prevent content from being used limitlessly without reporting the usage amount of the content by a user by limiting usage of the content, when a usage amount of content is not reported based on limitation information on reporting of the usage amount of the content. In addition, it is possible to protect privacy of the user, since the user has a choice on recorded and reported content by receiving information on whether policy information on measuring or reporting of the content is agreed from the user or by previously receiving a set value from the user.

The present invention can also be embodied as computer readable codes on a computer readable recording medium. The computer readable recording medium is any data storage device that can store data which can be thereafter read by a computer system. Examples of the computer readable recording medium also include read-only memory (ROM), random-access memory (RAM), CD-ROMs, DVDs, magnetic tapes, floppy disks, and/or optical data storage devices. The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital rights management (DRM) method of measuring a usage amount of content used in a device (120) and reporting the measured usage amount to a server (110), the DRM method comprising:
receiving policy information on the measuring or reporting including limitation information on the reporting from the server (110); and
limiting usage of the content when the reporting is not performed according to the limitation information included in the received policy information.

2. The DRM method of claim 1, further comprising:
receiving information on whether the received policy information is agreed to by the user;
transmitting a message requesting the device (120) to be registered to the server (110) when receiving information indicating that the received policy information is agreed by the user; and
registering the device (120) when the server (110) receives the message.

3. The DRM method of claim 1 or 2, further comprising:
receiving a set value on the measuring or reporting from a user;
transmitting a message requesting the device (120) to be registered to the server (110) when the received policy information matches the received set value; and
registering the device (120) when the server (110) receives the message.

4. The DRM method of claim 3, further comprising:
receiving information on whether the received policy information is agreed to by the user, when the received policy information does not match the received set value; and
transmitting a message requesting the device (120) to be registered to the server (110), when receiving information indicating that the received policy information is agreed to by the user.

5. The DRM method of claim 1, wherein:
the limitation information corresponds to a predetermined time; and
the limiting of the usage comprises limiting the usage of the content when the reporting is not performed for the predetermined time.

6. The DRM method of claim 1, wherein:
the limitation information corresponds to a predetermined usage count of the content; and
the limiting of the usage comprises limiting the usage of the content when the reporting is not performed until the content is used for the predetermined usage count.

7. The DRM method of claim 1, further comprising:
reporting the measured usage amount based on the period information;
wherein the policy information further comprises period information on a period for which the reporting is performed.

8. The DRM method of claim 7, wherein:
the period information corresponds to a predetermined time; and
the reporting of the measured usage amount comprises reporting the measured usage amount at intervals of the predetermined time.

9. The DRM method of claim 7, wherein:
the period information corresponds to a predetermined usage count of the content; and
the reporting of the measured usage amount comprises reporting the measured usage amount whenever the content is used until the content is used for the predetermined usage count.

10. A digital rights management method of measuring a usage amount of content used in a device (120) and reporting the measured usage amount to a server (110), the DRM method comprising:
receiving a rights object corresponding to selected content and including limitation information on the reporting from the server (110); and
limiting usage of the content when the reporting of the selected content is not performed according to the limitation information.

11. The DRM method of claim 10, wherein:
the limitation information corresponds to a predetermined time; and
the limiting of the usage comprises limiting the usage of the content when the reporting is not performed for the predetermined time.

12. The DRM method of claim 10, wherein:
the limitation information corresponds to a predetermined usage count of the content, and
the limiting of the usage comprising limiting the usage of the content when the reporting is not performed until the content is used for the predetermined usage count.

13. A device (120) to measure a usage amount of content and to report the measured usage amount to a server (110), the device (120) comprising:
a policy information storage unit (145) to store policy information on the measuring or reporting including limitation information on the reporting; and
a DRM agent (125) to limit usage of the content when the reporting is not performed according to the limitation information included in the policy information.

14. The device (120) of claim 13, further comprising:
a user interface (135) to receive information on whether the received policy information is agreed to by a user; and
a transceiver (145) to transmit a message requesting the device (120) to be registered, when receiving information indicating that the received policy information is agreed by the user;
wherein the policy information is received from the server (110).

15. The device (120) of claim 13, wherein:
the user interface (135) receives a set value on the measuring or reporting from the user, and when the received policy information does not match the received set value, the user interface (135) receives information on whether the received policy information is agreed by the user; and
when the received policy information matches the received set value or when information indicating that the received policy information is agreed to is received from the user, the transceiver (145) transmits a message requesting the device (120) to be registered.

16. The device (120) of claim 13, wherein:
the limitation information corresponds to a predetermined time; and
the DRM agent (125) limits usage of the content when the reporting is not performed for the predetermined time.

17. The device (120) of claim 13, wherein:
the limitation information corresponds to a predetermined usage count of the content; and
the DRM agent (125) limits usage of the content when the reporting is not performed until the content is used for the predetermined usage count.

18. The device (120) of claim 13, wherein:
the policy information further comprises period information on a period for which the reporting is performed; and
the DRM agent (125) reports the measured usage amount to the server (110) based on the period information.

19. The device (120) of claim 18, wherein:
the period information corresponds to a predetermined time; and
the DRM agent (125) reports the measured usage amount at intervals of the predetermined time.

20. The device (120) of claim 18, wherein:
the period information corresponds to a predetermined usage count of the content; and
the DRM agent (125) reports the measured usage amount whenever the content is used until the content is used for the predetermined usage count.

21. A digital rights management (DRM) system comprising:
a device (120) to measure a usage amount of content and to report the measured usage amount; and
a server (110) to receive the report from the device (120);
wherein the server (110) transmits policy information on the measuring or reporting comprising limitation information on the reporting to the device (120), and the device (120) limits usage of the content when the reporting is not performed according to the limitation information included in the policy information.

22. The DRM system of claim 21, wherein:
the policy information further comprises period information on a period for which the reporting is performed; and
the device (120) reports the measured usage amount to the server (110) based on the period information.

23. The DRM system of claim 21, wherein:
the server (110) transmits a message to the device (120) requesting the device (120) to perform the reporting; and
the device (120) reports the measured usage amount to the server (110) in response to the message.

24. The DRM system of claim 23, wherein:
the message comprises domain information, a content ID, or time information; and
the device (120) reports a usage amount of content shared in the domain, a usage amount of content corresponding to the content ID, or a usage amount of content used for a time corresponding to the time information, in accordance with the message.

25. A computer-readable recording medium having embodied thereon a computer program to execute the DRM method of any of claims 1 to 9 or claims 10 to 12.
